(19) Europäisches Patentamt
European Patent Office
Office européen des brevets

(11) Publication number: **0 582 871 A2**

# (12) EUROPEAN PATENT APPLICATION

(21) Application number: **93111744.4**

(22) Date of filing: **22.07.93**

(51) Int. Cl.[5]: **C08L 81/00**, C08K 3/02, C08K 3/32, //(C08L81/00,71:12)

(30) Priority: **06.08.92 JP 210202/92**

(43) Date of publication of application: **16.02.94 Bulletin 94/07**

(84) Designated Contracting States: **DE FR GB**

(71) Applicant: **SUMITOMO CHEMICAL COMPANY, LIMITED**
**5-33, Kitahama 4-chome**
**Chuo-ku**
**Osaka(JP)**

(72) Inventor: **Nagaoka, Kenji**
**832-4, Shiizu**
**Ichihara-shi(JP)**
Inventor: **Gotoh, Satoru**
**98, Daijuku**
**Sodegaura-shi(JP)**

(74) Representative: **VOSSIUS & PARTNER**
**Postfach 86 07 67**
**D-81634 München (DE)**

(54) **Flame-resistant resin composition.**

(57) A flame-resistant resin composition excellent in heat resistance which comprises (A) a flame-resistant thermoplastic resin, (B) at least one non-flame-resistant polymer selected from the group consisting of non-flame-resistant thermoplastic resins and non-flame-resistant elastomers, (C) at least one inorganic phosphorus compound, and if necessary (D) a filler.

EP 0 582 871 A2

The present invention relates to a flame-resistant resin composition. In particular, it relates to a thermoplastic, flame-resistant resin composition excellent in heat resistance and mechanical properties which comprises a flame-resistant thermoplastic resin and a non-flame-resistant thermoplastic resin and/or elastomer as the main components.

Flame-resistant thermoplastic resins typically represented by polyphenylene sulfides, polyethersulfones and polyetherketones generally have high heat resistance in addition to high flame resistance, and hence are widely used in practice as various molded articles and films in fields where a high degree of flame resistance and heat resistance is required.

However, these flame-resistant thermoplastic resins have defects of poor moldability, including flowability and flash-developing property, and unsatisfactory mechanical strength, which poses a great obstacle to further extension of their use.

A common method which has been used in order to improve such defects of flame-resistant thermoplastic resins is to blend with the resins other thermoplastic resins and/or elastomers.

In the case of polyphenylene sulfide, for instance, the following examples of blends with other thermoplastic resins have been disclosed: a resin composition comprising polyarylene sulfide and polyphenylene ether (JP-B-56-34032), a resin composition comprising polyphenylene sulfide and polystyrene and the copolymer thereof (JP-A-51-62849), a resin composition comprising polyphenylene sulfide and polycarbonate (U.S.P. No. 4,021,596 and JP-A-51-59952), a resin composition comprising polyphenylene sulfide and polyester (JP-A-57-168945), and a resin composition comprising polyphenylene sulfide and polyamide (JP-A-53-69255 and JP-A-61-126170).

Among thermoplastic resins, in particular, polyphenylene ether resin has excellent mechanical and electric properties and high heat resistance and hence, in this respect, it is a suitable resin for use in blending with flame-resistant thermoplastic resins. However, in general, a flame-resistant thermoplastic resin and a polyphenylene ether resin have a low affinity to each other, so that a compatibilizer is used to obtain a resin composition excellent in mechanical properties by blending the two resins. Such resin compositions which have been hitherto disclosed include: a resin composition comprising polyphenylene ether, a crystalline thermoplastic resin and a compatibilizer (JP-A-63-183954), a polymer mixture comprising polyphenylene ether, polyarylene sulfide and a compatibilizer used in polyphenylene ether-polyamide polymer mixtures (JP-A-2-36261), a resin composition comprising polyphenylene sulfide, polyphenylene ether, and a compound having a specific partial structure (EP 0368413A2), and a resin composition comprising a modified polyphenylene ether modified with an unsaturated carboxylic acid or unsaturated carboxylic acid anhydride, polyphenylene sulfide, and a polyisocyanate compound, and a resin composition comprising polyphenylene ether, polyphenylene sulfide, a modifier which is an unsaturated carboxylic acid or unsaturated carboxylic acid anhydride, and a polyisocyanate compound (JP-A-2-49023).

As to an example of a blend with an elastomer, a resin composition comprising an isocyanate-modified polyphenylene sulfide and an acid-graft-modified olefin copolymer elastomer has been disclosed (JP-A-3-54257).

However, resin composition hitherto proposed comprising polyarylene sulfide and other thermoplastic resins or elastomers are not satisfactory in flame resistance though they are satisfactory with respect to mechanical properties, and thus they have lost one of the excellent characteristics inherent to polyarylene sulfide.

On the other hand, with the aim of improving the flame resistance of resin compositions comprising polyarylene sulfide and other thermoplastic resins or elastomers, there has been proposed a resin composition which comprises 100 parts by weight of a composition consisting essentially of polyphenylene sulfide and another thermoplastic resin and 1-50 parts by weight of an organic flame retardant having a thermal weight decrease initiation temperature of 260 °C or more (JP-A-63-97662). However, the resin composition has a defect in that its heat resistance is low as compared with that of the corresponding resin composition incorporated with no flame retardant though it has a satisfactory flame resistance, so that it is not satisfactory from the industrial viewpoint.

As described above, there has not been found up to the present a resin composition which comprises a flame-resistant thermoplastic resin represented by polyphenylene sulfide and a non-flame-resistant thermoplastic resin or elastomer excellent in both heat resistance and flame resistance.

The object of the present invention is to provide a thermoplastic, flame-resistant resin composition having excellent heat resistance characterized by heat resistance and flame resistance, which comprises as the main constituents, a flame-resistant thermoplastic resin, a non-flame-resistant thermoplastic resin and/or an elastomer.

After extensive study directed to achieving the aforesaid object, the present inventors have found that a specific inorganic phosphorus compound gives a resin composition excellently well balanced between heat

resistance and flame resistance specifically as compared with various other flame retardants hitherto proposed, without using the aid of a flame retarding auxiliary, such as a molybdenum compound. The present invention has been accomplished on the basis of the above finding.

Thus, according to the present invention, there is provided a flame-resistant resin composition comprising (A) a flame-resistant thermoplastic resin, (B) at least one non-flame-resistant polymer selected from the group consisting of non-flame-resistant thermoplastic resins and non-flame-resistant elastomers, (C) at least one inorganic phosphorus compound, in an amount effective for giving flame resistance, selected from the group consisting of red phosphorus and phosphoric acid salts and, if necessary, (D) a filler.

Further, according to the present invention, there is provided a flame-resistant resin composition comprising said resin composition and (E) a compatibilizer incorporated thereinto in an amount of 0.01 to 10 parts by weight per 100 parts by weight of the total of the component (A) and the component (B).

The flame-resistant thermoplastic resin (A) referred to in the present invention is a thermoplastic resin which has a flame resistance of rank V-O as evaluated with a 1/16-inch thick test piece according to Subject 94 of the Standards of U.S. Underwriters Laboratories Inc. (namely, UL 94). The flame-resistant thermoplastic resin (A) may consist of plural species of resin.

As specific examples of the flame-resistant thermoplastic resin (A), there may be mentioned polymers comprising at least one kind of repeating unit having the structure represented by the general formula (1),

$$\left[ Ar - X \right] \quad (1)$$

wherein Ar represents a divalent aromatic residual group and X represents a divalent group selected from the group consisting of -O-, -S-, -CO-, $-SO_2-$, -COO- and -CONH-.

In the general formula (1), the aromatic residual group (Ar) is preferably selected from the group consisting of the groups represented by the formulas (2)-(9).

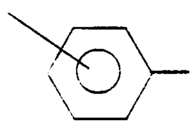

(2)

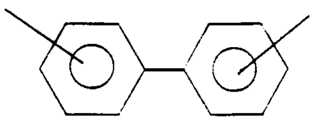

(3)

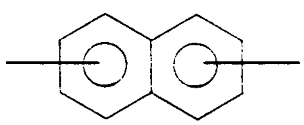

(4)

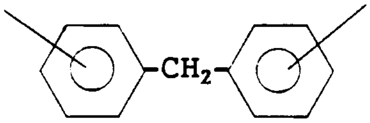

(5)

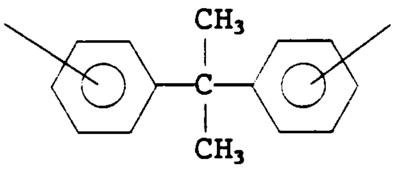

(6)

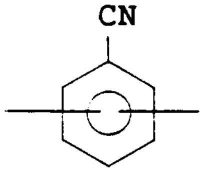

(7)

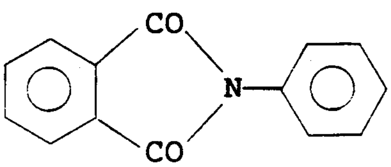

(8)

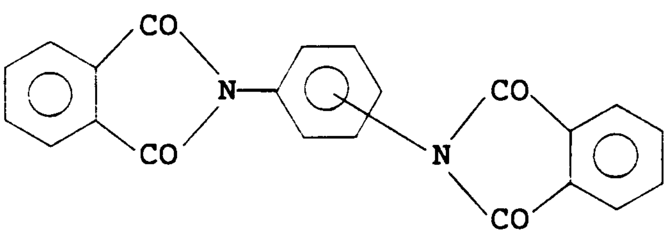

(9)

Polymers in which the repeating units contain, in addition to the aforesaid divalent aromatic residual groups, a small amount of a tri-functional group represented by the formula (10) may also be included in the flame-resistant thermoplastic resins (A) having the repeating units represented by the formula (1).

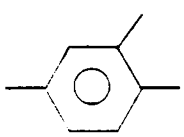

(10)

Specific examples of the flame-resistant thermoplastic resin having the repeating units represented by the formula (1) include polyphenylene sulfide, poly(biphenylene sulfide), poly(oxy-phenylene-sulfonyl-phenylene), poly(thio-phenylene-sulfonyl-phenylene), poly(oxy-phenylene-sulfonyl-phenylene-oxy-phenylene-isopropylidene-phenylene), poly(oxy-phenylene-sulfonyl-biphenylene-sulfonyl-phenylene), poly-(oxy-phenylene-carbonyl-phenylene), poly(oxy-phenylene-carbonyl-phenylene-oxy-phenylene) and poly[oxy-(phenylene-bisphthalimidyl)-oxy-phenylene-isopropylidene-phenylene]. Preferred flame-resistant thermoplastic resins among them are polyphenylene sulfide and poly(oxy-phenylene-sulfonyl-phenylene).

The molecular weight of the flame-resistant thermoplastic resin (A) is not particularly limited, but it is generally 20 to 1,000, preferably 50 to 500, in terms of the degree of polymerization (polycondensation).

The non-flame-resistant polymer (B) referred to in the present invention is at least one member selected from the group consisting of non-flame-resistant thermoplastic resins and non-flame-resistant elastomers. The term "non-flame-resistant" herein means that the rank of flame resistance in the aforesaid UL94 is V-1 or lower. The non-flame-resistant polymer (B) may also consist of plural species of compounds.

Specific examples of the non-flame-resistant thermoplastic resins include styrene resins such as polystyrene, AS resin, ABS resin, and MBS resin; acrylic resins such as poly(methyl methacrylate); olefin resins such as polyethylene, polypropylene and poly-4-methylpentene-1; polyacetal resins such as polyoxymethylene; polyester resins such as polyethylene terephthalate, polybutylene terephthalate and polyallylate; polyamide resins such as polyamide 6, polyamide 4,6, polyamide 6,6, polyamide 12, polyamide 6,12, and polyamide MXD,6; polycarbonate resins such as poly(oxy-carbonyloxy-phenylene-isopropylidene-phenylene); and polyphenylene ether resins such as poly(oxy-2,6-dimethyl-1,4-phenylene).Preferred non-flame-resistant thermoplastic resins among them are polyphenylene ether resins.

The molecular weight of the non-flame-resistant thermoplastic resin is not particularly limited, but it is generally 20 to 1,000, preferably 50 to 500, in terms of the degree of polymerization (polycondensation).

Specific examples of the non-flame-resistant elastomer include olefin polymer elastomers such as polybutadiene, polyisoprene, ethylene-propylene copolymer rubber, and ethylene-propylene-nonconjugated diene copolymer rubber; olefin polymer elastomers containing at least one kind of functional group selected from the group consisting of the epoxy group, carboxyl group and acid anhydride groups; butadiene-styrene copolymer rubbers, butadiene-acrylonitrile copolymer rubbers, and styrene-containing elastomers such as block copolymers consisting essentially of a block of hydrogenated and non-hydrogenated alkenylaromatic hydrocarbon polymer and a block of aliphatic hydrocarbon polymer; polyester elastomers; acrylic elastomers; and the modification products thereof.

Preferred non-flame-resistant elastomers among these are those which are selected from the group consisting of olefin polymer elastomers containing at least one kind of functional group selected from the group consisting of the epoxy group, carboxyl group and acid anhydride groups and block copolymers consisting essentially of a block of alkenylaromatic hydrocarbon polymer and a block of aliphatic hydrocarbon polymer.

Particularly preferred non-flame-resistant elastomers are thermoplastic, hydrogenated or non-hydrogenated styrene-conjugated diene block copolymers.

The molecular weight of the non-flame-resistant elastomer usable in the present invention is not particularly limited, but it is generally 5,000 to 200,000.

The inorganic phosphorus compound (C) referred to in the present invention is a compound selected from the group consisting of red phosphorus and phosphoric acid salts. The inorganic phosphorus compound (C) may also consist of plural components. The term "phosphoric acid salts" herein includes metal salts of phosporic acid, phosphorous acid, hypophosphorous acid, metaphosphoric acid, pyrophosphoric acid and polyphosphoric acid.

Specific examples of the phosphoric acid salt include alkali metal phosphates, such as lithium phosphate, sodium phosphate and potassium phosphate; alkaline earth metal phosphates, such as calcium phosphate and magnesium phosphate; and transition metal phosphates, such as iron phosphate.

Preferred inorganic phosphorus compounds (C) are compounds selected from the group consisting of red phosphorus and alkaline earth metal phosphates. A more preferred inorganic phosphorus compound (C) is red phosphorus or magnesium phosphate.

The resin composition of the present invention may, if necessary and desired, contain a filler (D). As examples of such fillers, there may be mentioned inorganic fibers such as glass fiber, potassium titanate fiber, rock wool and carbon fiber; organic fibers such as aromatic polyamide fiber and polybenzimidazole fiber; metallic fibers such as stainless steel fiber, brass fiber and aluminum-zinc fiber; inorganic compound particles such as glass beads, asbestos, bentonite, wollastonite, mica, talc, clay, calcium carbonate, magnesium hydroxide, barium sulfate, dolomite, silica, aluminosilicate and diatomaceous earth; metallic particles such as aluminum flakes and zinc flakes; and organic compound particles such as polyimide powders.

Preferred among these fillers is glass fiber.

The compounding ratio of the flame-resistant thermoplastic resin (A) and the non-flame-resistant polymer (B) in the resin composition of the present invention may be selected as desired according to intended purposes, for example, the heat resistance, flowability, impact resistance, and rigidity required of the composition, and is not particularly limited. In general, however, the composition comprises, in terms of % by weight based on the total amount of the flame-resistant thermoplastic resin (A) and the non-flame-resistant polymer (B), 20-95%, preferably 30-90%, of the flame-resistant thermoplastic resin (A) and 80-5%, preferably 70-10%, of the non-flame-resistant polymer (B).

The inorganic phosphorus compound (C) should be compounded in an amount effective for giving flame resistance, that is, in an amount sufficient for enhancing the flame resistance of the resulting resin composition. It is compounded in an amount of preferably 0.1 to 30 parts by weight, more preferably 0.2 to 20 parts by weight, relative to 100 parts by weight of the sum of the flame-resistant thermoplastic resin (A) and the non-flame-resistant polymer (B).

The filler (D), an optional component, can be used in the range of amount of 0 to 200 parts by weight, preferably 5 to 160 parts by weight, relative to 100 parts by weight of the sum of the components (A) and (B).

The "compatibilizer (E)" which may optionally be used in the present invention refers to a substance which exerts an effect of enhancing the compatibility between the flame-resistant thermoplastic resin (A) and the non-flame-resistant polymer (B). As examples of such compatibilizers, mention may be made of the epoxy compound disclosed in JP-B-60-11063 (USP 4528346, EP 104543B) and the compatibilizer used for blending polyphenylene ether with crystalline thermoplastic resins, such as polyamide, disclosed in the aforesaid JP-A-63-183954 and JP-A-2-36261. These compatibilizers are to be construed as being included in the present specification by citation of these patent specifications.

Preferred among these compatibilizers (E) are polyisocyanates. The polyisocyanate referred to herein means an organic compound having two or more isocyanate groups and/or isothiocyanate groups in one molecule. As specific examples of the polyisocyanate, mention may be made of aromatic polyisocyanates, such as m-phenylene diisocyanate, 2,4-toluylene diisocyanate, 2,6-toluylene diisocyanate, 4,4'-diphenylmethane diisocyanate, 4,4'-diphenylpropane diisocyanate, naphthylene-1,5-diisocyanate, 3,3'-dimethylbiphenyl-4,4'-diisocyanate, dimethyldiphenylmethane diisocyanate, diphenyl ether-4,4'-diisocyanate, diphenyl sulfone-4,4'-diisocyanate, and triphenylmethane triisocyanate; araliphatic polyisocyanates, such as xylylene diisocyanate; aliphatic polyisocyanates, such as 4,4'-cyclohexane diisocyanate, dicyclohexylmethane-4,4'-diisocyanate, isophorone diisocyanate, 1,12-dodecane diisocyanate, hexamethylene diisocyanate, and 2,4,4-trimethylhexamethylene diisocyanate; the mixtures thereof; and compounds having isothiocyanate groups corresponding thereto. Further, modified products of these polyisocyanates, e.g., oligomer-type, such as dimers and trimers; carbodimide-modified type; and blocked type wherein the isocyanate groups have been masked with e.g. phenols or lactams are also included in the polyisocyanates referred to in the present invention.

Preferred among the above-mentioned polyisocyanates are aromatic polyisocyanates and aliphatic polyisocyanates. More preferred polyisocyanates are 2,4-toluylene diisocyanate, 2,6-toluylene diisocyanate, 4,4'-diphenylmethane diisocyanate, 3,3'-dimethylbiphenyl-4,4'-diisocyanate, diphenyl ether-4,4'-diisocyanate, hexamethylene diisocyanate, and isophorone diisocyanate. The most preferred polyisocyanates are 4,4'-diphenyl-methane diisocyanate and polymethylene polyphenylene polyisocyanate.

When a compatibilizer (E) is used in the resin composition of the present invention, the suitable range of effective amount thereof to be used cannot be simply specified because its effect varies depending not only on the kind of the compatibilizer itself but also on the kinds and the mixing ratio of the flame-resistant thermoplastic resin (A) and the non-flame-resistant high molecular compound (B) selected. In general, however, the amount of the compatibilizer (E) is 0.01 to 20 parts by weight, preferably 0.1 to 10 parts by weight, relative to 100 parts by weight of the sum of the flame-resistant thermoplastic resin (A) and the non-flame-resistant high molecular compound (B).

The resin composition of the present invention may be prepared by various methods known to the art, e.g., solution blending and melt blending, of which melt blending is preferred. The melt blending may be conducted, for example, mixing the above-mentioned respective components by conventional means used for mixing two or more resins with one another or mixing a resin with a liquid or solid additive, e.g. with a Henschel mixer, Super mixer, ribbon blender or V-blender, to form a uniform mixture, and then kneading the mixture by using conventional means of kneading, such as a Banbury mixer, Plastomil, Brabender plastograph, or single- or twin-screw extruder.

The temperature in the kneading is selected from the range of 150 to 400 °C, preferably 200 to 350 °C.

When a compatibilizer (E) is used, tertiary amines, quaternary ammonium salts, imidazoles, and the like, which serve as a catalyst for promoting its reaction, may be added without any restriction so long as

the addition suits the object of the present invention.

The resin composition of the present invention may, if necessary and desired, contain a wide variety of other substances than those described above. Examples of such other substances include organic flame retardants, stabilizers, plasticizers, and lubricants. There may be mentioned as specific examples of organic flame retardants aromatic phosphoric esters and brominated epoxy resins; as specific examples of stabilizers steric hindered phenols, oxalic acid diazides, and steric hindered amines; and as specific examples of lubricants polyethylene wax, paraffin, long-chain fatty acids and long-chain fatty acid metal salts.

The amount of the aforesaid "other substance" to be compounded can be selected as desired according to intended purposes but, as a standard in general use, it is 10 parts by weight or less relative to 100 parts by weight of the total of the flame-resistant thermoplastic resin (A) and the non-flame-resistant high molecular compound (B).

The resin composition according to the present invention may be used, for example, for various cases, such as frames, connectors, switches, and other mechanism elements in the field of electrics, electronics and office automation; for magnet flywheels, door mirror stays, lamp reflectors, cylinder head covers, and various gears in the field of automobiles and vehicles; and for various housings, pulleys and handles in the field of machinery.

The present invention will be described further in detail below with reference to Examples, but the scope of the present invention is in no way limited thereby.

The abbreviations used in Examples and Comparative Examples have the following meanings.

PPE : poly(2,6-dimethyl-1,4-phenylene ether) having an intrinsic viscosity of 0.46 dl/g as determined in chloroform at 30 °C.

PPS-A : linear type polyphenylene sulfide (Ryton E1880, mfd. by Toray-Phillips Petroleum Co., Ltd.).

PPS-B : cross-linked type polyphenylene sulfide (Ryton M2900, mfd. by Toray-Phillips Petroleum Co., Ltd.).

PES : poly(oxy-phenylene-sulfonyl-phenylene) (Victrex 4100P, mfd. by I.C.I. Corporation, England).

cMDI : Polymethylene polyphenylene polyisocyanate (Sumijule 44V20, mfd. by Sumitomo-Byer Urethane Co., Ltd.).

TPP : triphenyl phosphate

MgP : magnesium phosphate octahydrate.

SEBS : partially hydrogenated styrene-butadiene-styrene triblock copolymer (Kraton G1651, mfd. by Shell Chemical Co., Ltd.).

GF : glass fiber having a fiber length of 3 mm (TP75, mfd. by Nihon Glass Fiber Co., Ltd.).

TALC : talc (Micronwhite 5000E, mfd. by Hayashi Chemical Co.).

The test pieces used in respective determinations in Examples and Comparative Examples were prepared by injection molding using an injection molding machine at a molding temperature of 320 to 340 °C and a die temperature of 140 °C.

The Izod impact strength was determined with a test piece having 3.2 mm in thickness according to ASTM D256 at 23 °C. The heat distortion temperature (HDT) was determined according to ASTM D648 at a load of 18.6 kg/cm$^2$.

The flame resistance was evaluated with a test piece having 1/2 inch in width, 5 inches in length and 1/32 inch in thickness according to Subject 94 of the Standards of U.S. Underwriters Laboratories, Inc. (UL94).

Example 1

Into a twin-screw extruder of 50 mm diameter (TEM-50, mfd. by Toshiba Machinery Co., Ltd.) provided with feed ports at two positions at the upper stream side end and the center, were respectively fed continuously a mixture comprising 30 parts by weight of PPE and 50 parts by weight of PPS-A from the upper stream side feed port and a mixture comprising 20 parts by weight of PPS-A and 1 part by weight of red phosphorus from the center feed port, while keeping the aforementioned ratio, and the resulting blend was extruded at a barrel temperature of 320 °C. The extruded strands were pelletized to obtain the resin composition of the present invention.

Table 1 shows the Izod impact strength without notch, HDT and flame resistance of the composition.

Comparative Example 1

The same procedures as in Example 1 were followed except that no red phosphorus was used, to obtain a resin composition.

The composition was subjected to the same tests as in Example 1, and the results are shown in Table 1.

Example 2

Into the same twin-screw extruder as used in Example 1 were respectively fed continuously a mixture comprising 35 parts by weight of PPE, 50 parts by weight of PPS-A and 3 parts by weight of cMDI from the upper stream side feed port and a mixture comprising 15 parts by weight of PPS-A and 2 parts by weight of red phosphorus from the center feed port, while keeping the aforesaid ratio, and the resulting blend was extruded at a barrel temperature of 320 °C. The extruded strands were pelletized to obtain the resin composition of the present invention.

The composition was subjected to the same tests as in Example 1, and the results are shown in Table 1.

Example 3

Into the same twin-screw extruder as used in Example 1 were respectively fed continuously a mixture comprising 34 parts by weight of PPE, 40 parts by weight of PPS-A and 3 parts by weight of cMDI from the upper stream side feed port and a mixture comprising 11 parts by weight of PPS-A and 2 parts by weight of red phosphorus from the center feed port, while keeping the above-mentioned ratio, and the resulting blend was extruded at a barrel temperature of 320 °C. The extruded strands were pelletized to obtain the resin composition of the present invention.

The composition was subjected to the same tests as in Example 1, and the results are shown in Table 1.

Comparative Example 2

The same procedures as in Example 3 were followed except for using 5 parts by weight of TPP in place of 2 parts by weight of red phosphorus, to obtain a resin composition.

The composition was subjected to the same tests as in Example 1, and the results are shown in Table 1.

Example 4

Into the same twin-screw extruder as used in Example 1 were respectively fed continuously a mixture comprising 30 parts by weight of PPE, 50 parts by weight of PES and 3 parts by weight of cMDI from the upper stream side feed port and a mixture comprising 20 parts by weight of PES and 2 parts by weight of red phosphorus from the center feed port, while keeping the above-mentioned ratio, and the resulting blend was extruded at a barrel temperature of 320 °C. The extruded strands were pelletized to obtain the resin composition of the present invention.

The composition was subjected to the same tests as in Example 1, and the results are shown in Table 1.

Comparative Example 3

The same procedures as in Example 4 were followed except that no red phosphorus was used, to obtain a resin composition.

The composition was subjected to the same tests as in Example 1, and the results are shown in Table 1.

Referential Example 1

A mixture comprising 40 parts by weight of PPE, 60 parts by weight of PPS-B and 3 parts by weight of cMDI was continuously fed into the same twin-screw extruder as used in Example 1 through its upper

stream side feed port, and extruded at a barrel temperature of 320 °C. The extruded strands were pelletized to obtain a resin composition. The composition is designated as prekneaded blend.

Examples 5 - 7, Comparative Examples 4 and 5

By using a single screw extruder of 65 mm diameter, respective mixtures comprising 100 parts by weight of the prekneaded blend obtained in Referential Example 1 and the components (C) and (D) shown in Table 2 were extruded at a barrel temperature of 320 °C. The extruded strands were pelletized to obtain resin compositions.

The Izod impact strength with notch, HDT and flame resistance of the respective compositions are shown in Table 2.

The resin composition of the present invention thus obtained are, by virtue of its excellent flame resistance and heat resistance, molded by various methods, such as extrusion, injection molding and blow molding, and supplied to the market as a large variety of useful resin products. It is thus of a great industrial value.

Table 1

| No. | Composition | | | | | | | | | | Physical property | | |
|---|---|---|---|---|---|---|---|---|---|---|---|---|---|
| | Component (A) | | Component (B) | | | | Component (C) | | Component (E) | | Impact strength[a] (kg·cm/cm) | HDT (°C) | Flame resistance |
| | Kind | Part | Kind | Part | Kind | Part | Kind | Part | Kind | Part | | | |
| Example 1 | PPS-A | 70[b)] | PPE | 30 | - | - | Red phosphorus | 1 | - | - | 22 | 141 | V-0 |
| Comp. Example 1 | PPS-A | 70[b)] | PPE | 30 | - | - | - | - | - | - | 22 | 143 | V-1 |
| Example 2 | PPS-A | 65[c)] | PPE | 35 | - | - | Red phosphorus | 2 | cMDI | 3 | 40 | 140 | V-0 |
| Example 3 | PPS-A | 51[d)] | PPE | 34 | SEBS | 15 | Red phosphorus | 2 | cMDI | 3 | 164 | 133 | V-0 |
| Comp. Example 2 | PPS-A | 51[d)] | PPE | 34 | SEBS | 15 | TPP | 5 | cMDI | 3 | 186 | 121 | V-1 |
| Example 4 | PES | 70[b)] | PPE | 30 | - | - | Red phosphorus | 2 | cMDI | 3 | 30 | 190 | V-0 |
| Comp. Example 3 | PES | 70[b)] | PPE | 30 | - | - | - | - | cMDI | 3 | 32 | 191 | V-1 |

- To be cont'd -

Table 1 (Cont'd)

Note:

a) Izod impact strength without notch

b) Out of 70 parts, 50 parts were fed from the upper stream side feed port, and 20 parts from the center feed port.

c) Out of 65 parts, 50 parts were fed from the upper stream side feed port, and 15 parts from the center feed port.

d) Out of 51 parts, 40 parts were fed from the upper stream side feed port, and 11 parts from the center feed port.

Table 2

| No. | Composition | | | | | Physical property | | |
|---|---|---|---|---|---|---|---|---|
| | Prekneaded blend (part) | Component (C) | | Component (D) | | Impact strength[a] (kg·cm/cm) | HDT (°C) | Flame resist-ance |
| | | Kind | Part | Kind | Part | | | |
| Example 5 | 100 | Red phosphorus | 1 | GF | 67 | 7.8 | 257 | V-0 |
| Example 6 | 100 | MgP | 5 | GF | 67 | 6.2 | 250 | V-0 |
| Comp. Example 4 | 100 | - | - | GF | 67 | 7.5 | 259 | V-1 |
| Example 7 | 100 | Red phosphorus | 2 | TALC | 43 | 2.0 | 188 | V-0 |
| Comp. Example 5 | 100 | - | - | TALC | 43 | 2.0 | 189 | V-1 |

Note: a) Izod impact strength with notch

## Claims

**1.** A flame-resistant resin composition comprising (A) a flame-resistant thermoplastic resin, (B) at least one non-flame-resistant polymer selected from the group consisting of non-flame-resistant thermoplastic

resins and non-flame-resistant elastomers, (C) at least one inorganic phosphorus compound selected from the group consisting of red phosphorus and phosphoric acid salts in an amount effective for imparting flame resistance and, if necessary, (D) a filler.

**2.** A flame-resistant resin composition according to Claim 1, wherein the amount of the inorganic phosphorous compound (C) is 0.1 to 30 parts by weight and the amount of the filler (D) is 0 to 200 parts by weight, respectively, based on 100 parts by weight of the sum of the 20 to 95% by weight of the flame-resistant thermoplastic resin and 80 to 5% by weight of the non-flame-resistant polymer.

**3.** A flame-resistant resin composition according to Claim 1 which comprises, in addition to the resin composition of Claim 1, 0.01 to 10 parts by weight of (E) a compatibilizer based on 100 parts by weight of the sum of the component (A) and the component (B).

**4.** A flame-resistant resin composition according to Claim 1, wherein the flame-resistant thermoplastic resin (A) is a polymer comprising at least one kind of repeating unit having the structure represented by the general formula (1)

$$\left[ Ar - X \right] \quad (1)$$

wherein Ar represents a divalent aromatic residual group and X represents a divalent group selected from the group consisting of -O-, -S-, -CO-, $-SO_2-$, -COO- and -CONH-.

**5.** A flame-resistant resin composition according to Claim 4, wherein the polymer comprising at least one repeating unit having the structure represented by the general formula (1) is a polymer selected from the group consisting of polyphenylene sulfide, poly(oxy-phenylene-sulfonyl-phenylene),poly(thio-phenylene-sulfonyl-phenylene), poly(oxy-phenylene-sulfonyl-phenylene-oxy-phenylene-isopropylidene-phenylene), poly(oxy-phenylene-sulfonyl-biphenylene-sulfonyl-phenylene), poly(oxy-phenylene-carbonyl-phenylene), poly(oxy-phenylene-carbonyl-phenylene-oxy-phenylene), and poly[oxy-(phenylene-bisphthalimidyl)-oxy-phenylene-isopropylidene-phenylene].

**6.** A flame-resistant resin composition according to Claim 1, wherein the non-flame-resistant thermoplastic resin (B) is a thermoplastic resin selected from the group consisting of polyphenylene ether resin, polyacetal resin, polycarbonate resin, polyester resin, polyamide resin, styrene resin, olefin resin and acrylic resin.

**7.** A flame-resistant resin composition according to Claim 1, wherein the non-flame-resistant elastomer (B) is an elastomer selected from the group consisting of olefin polymer elastomers having at least one functional group selected from the group consisting of the epoxy group, carboxyl group and acid anhydride groups and block copolymers comprising a block of an alkenylaromatic hydrocarbon polymer and a block of an aliphatic hydrocarbon polymer.

**8.** A flame-resistant resin composition according to Claim 1, wherein the non-flame-resistant polymer (B) is a mixture of polyphenylene ether resin with a block copolymer comprising a block of an alkenylaromatic hydrocarbon polymer and a block of an aliphatic hydrocarbon polymer.

**9.** A flame-resistant resin composition according to Claim 1, wherein the phosphoric acid salt (C) is an alkaline earth metal phosphate.

**10.** A flame-resistant resin composition according to Claim 9, wherein the alkaline earth metal phosphate is magnesium phosphate.

**11.** A flame-resistant resin composition according to Claim 3, wherein the compatibilizer (E) is a polyisocyanate.

**12.** A flame-resistant resin composition according to Claim 2, wherein the amount of the filler (D) is 5 to 160 parts by weight.

**13.** A flame-resistant resin composition according to Claim 12, wherein the filler (D) is glass fiber.